# EUROPEAN PATENT APPLICATION

(11) **EP 3 471 425 A1**
(43) Date of publication of application: **17.04.2019**
(21) Application number: 17195631.1
(22) Date of filing: 10.10.2017
(51) Int. Cl.: H04N 21/439

(54) **AUDIO PLAYBACK SYSTEM, TV SET, AND AUDIO PLAYBACK METHOD**

(71) Applicant: Vestel Elektronik Sanayi ve Ticaret A.S., 45030 Manisa (TR)
(72) Inventor: DERELI, Ulas, 45030 Manisa (TR); ÖZBAY, Mustafa Caner, 45030 Manisa (TR)
(74) Representative: Ascherl, Andreas

(57) **Abstract**

The present invention provides an audio playback system (100, 200, 300) for a plurality of TV sets (101, 102, 201, 202, 301, 302), the audio playback system (100, 200, 300) comprising a position determination unit (107) configured to determine relative positions (108) of the TV sets (101, 102, 201, 202, 301, 302) to each other, and a control unit (109, 209, 214, 309, 314) for controlling the TV sets (101, 102, 201, 202, 301, 302) to adapt audio playback of an audio signal (113, 213, 313) according to the determined relative positions (108) of the TV sets (101, 102, 201, 202, 301, 302).

## Description

### TECHNICAL FIELD

The invention relates to an audio playback system for a plurality of TV sets. Further, the present invention relates to a respective TV set, and a respective audio playback method.

### BACKGROUND

Although applicable to any multimedia system, the present invention will mainly be described in conjunction with TV sets.

TV sets are usually presented in stores, where a user may view different TV sets and chose one of the TV sets according to his preferences. The single TV sets may play different or the same video sources and individually output the respective sound.

The sound that is played by the TV sets may be an important factor for the first perception of a TV set by a user. In stores with a plurality of different TV sets, these will each play sounds individually and for different video source. The different sound outputs may therefore interfere with each other and disturb the perception of a user.

In stores with large TV walls, where a plurality of TV sets is presented, it is sometimes possible to select a single TV set for audio playback. The other TV sets are then muted. However, the sound of a single TV set in a very large room, like e.g. a store show room, may sound weak and leave a bad impression with a potential customer.

Accordingly, there is a need for an improved audio playback of TV sets in show rooms.

### SUMMARY OF THE INVENTION

The present invention provides an audio playback system with the features of claim 1, a TV set with the features of claim 8, and an audio playback method with the features of claim 9.

Accordingly, it is provided:
An audio playback system for a plurality of TV sets, i.e. two or more, the audio playback system comprising a position determination unit configured to determine relative positions of the TV sets to each other, and a control unit for controlling the TV sets to adapt audio playback of an audio signal according to the determined relative positions of the TV sets.

Further, it is provided:
A TV set for an audio playback system according to the present invention, the TV set comprising at least two microphones, and a control unit coupled to the microphones and configured to determine a relative position of the TV set relative to other TV sets based on signals received from the microphones or configured to receive an externally determined indication of the relative position of the TV set relative to the other TV sets, wherein the control unit is configured to adapt audio playback of an audio signal in the TV set according to the relative position.

In addition, it is provided:
An audio playback method for a plurality of TV sets, the audio playback method comprising determining relative positions of the TV sets to each other, and adapting audio playback of an audio signal via the TV sets according to the determined relative positions of the TV sets.

The present invention is based on the finding that the acoustic performance of a TV set may have an important influence in a customer's decision to buy a TV set. However, in large stores with a plurality of TV sets e.g. on a demonstration wall, the audio playback of single TV sets may sound poor to a user standing in front of a plurality of running TV sets.

The present invention therefore provides the audio playback system to improve the sound perception for users in a store show room.

To this end the present invention provides the position determination unit that determines the relative positions of the single TV sets to each other. Knowing the relative positions of the single TV sets to each other allows modifying the audio playback in the single TV sets such that the sounds played by the single TV sets combine to a high quality sound or at least improves the sound quality compared to an uncoordinated audio playback by several TV sets.

The control unit uses the information about the relative positions of the TV sets to configure or control the audio playback in the single TV sets accordingly. It is assumed that all TV sets play a video from the same video source, as it is usually done on show room walls with a plurality of TV sets.

For example the control unit may determine that two TV sets are arranged next to each other based on the signals from the position determination unit, i.e. one TV set is on the left side and one TV set is on the right side. Without the audio playback system of the present invention, every TV set would play a stereo sound, e.g. a left and a right channel. This however would lead to the right channel of the left TV set being played right next to the left channel of the right TV set. Such an audio playback arrangement may be confusing for the customer.

With the present invention, the control unit may adapt the playback based on the known relative positions of the TV sets. Therefore, the control unit may in the above example control the left TV set to play only the left channel of an audio source on all speakers, and the right TV set to play only the right channel of an audio source on all speakers. The combined playback of the TV sets will now create a stereo sound experience for a user that is in front of the TV sets. It is understood, that the control unit may for example also control the left TV set to play the left audio channel only on the left speaker, and the right TV set to play the right audio channel only on the right speaker.

It is understood, that a plurality of different position determination units may be provided as will be explained in greater detail below. The position determination unit may e.g. be sound based, camera based or user configurable, where a user manually inputs the positions of the single TV sets.

It is further understood, that the control unit may be a single control unit that is coupled to the TV sets or that the control unit may comprise local controllers in the single TV sets. If the control unit comprises local controllers, these local controllers may for example individually determine the position of the TV sets relative to each other and determine respective audio playback parameters.

In addition, the control unit may comprise a combination of hardware and software. The control unit or the single local controllers may e.g. comprise processors, respective peripherals and a firmware or software that implements respective functions.

Summing up, with the audio playback system according to the present invention it is possible to provide an improved audio-visual experience in show rooms of stores to customers that want to buy a TV set.

Further embodiments of the present invention are subject of the further subclaims and of the following description, referring to the drawings.

In an embodiment, the position determination unit may comprise at least two microphones in every one of the TV sets. Further, the control unit may comprise a local controller in every one of the TV sets that is coupled to the respective microphones and is configured to determine the relative position of the respective TV set with regard to other TV sets based on the signals received by the microphones.

The microphones may e.g. be placed on both edges, the left and the right, of the TV set's frame. It is understood, that more microphones may be provided, e.g. also on the top and bottom edges of the TV set's frame.

The local controller that is coupled to the microphones may use the signals provided by the microphones to determine its (the TV set's) relative position. The local controller may for example analyze the signal levels of incoming sound. In a show room usually other TV sets will provide this sound. Especially during a setup of the audio playback system, a technician or store employee may make sure that no other sounds interfere with the measurement.

If a sound is received with a higher signal level at the left microphone than at the right microphone, the local controller may determine that it is positioned on the right of the source of the respective sound, and vice versa. If the same signal levels are received with both microphones, the local controller may determine that the TV set is positioned in the center between two other TV sets. Instead or in addition of signal levels, for example the signal propagation delay may also be analyzed.

Without further interaction of the TV sets with each other the single local controllers may then decide on how the audio part of a video source is reproduced. If a local controller determines that the respective TV set is positioned on the left of another TV set, the local controller may determine to play only the left audio channel on all speakers. If a local controller determines that the respective TV set is positioned on the right of another TV set, the local controller may determine to play only the right audio channel on all speakers. If a local controller determines that the respective TV set is positioned in the center between other TV sets, the local controller may determine to play the audio channels on the respective speakers, i.e. the left audio channel on the left speaker and the right audio channel on the right speaker. It is also possible that TV sets play rear channels of a surround sound audio source and that a TV set plays the subwoofer part of such an audio source, therefore providing a 5.1 (or any other X.Y, like 7.2 or 2.1) sound.

It is understood, that the local controllers may perform more sophisticated signal analysis to determine the relative position of the respective TV sets with regard to other TV sets. Such signal analysis may e.g. comprise separating sound signals from different TV sets that are concurrently received. This may e.g. be performed using sound source separation approaches like the principal components analysis approach or the independent component analysis approach.

It is further possible for the single local controllers to inject specific location sounds or sound beacons into the audio signal that is reproduced by the respective TV set. The local controllers may e.g. inject signals in a signal range that may not be perceived by the human ear, e.g. ultrasonic signals. These signals may however be received by the microphones in other TV sets to determine the position. Further, every TV set may e.g. use a unique frequency or sequence of frequencies when outputting that sound. This allows receiving TV sets to separate the signals from different source TV sets and analyze them separately. Since the added signal cannot be perceived by the human ear, the signal may be continuously output by the local controllers without interfering with the hearing experience of the potential customers. The communication via ultrasonic signals may also be enhanced such that the TV sets may communicate data via modulated ultrasonic signals. This allows coordinating the TV sets such that more complex room situations may be detected.

Further, in case that not all TV sets show the same content, the local controllers may also analyze the received audio signals and determine if the received audio signal is the same that is currently played by the TV set of the local controller. The local controller may then only perform any audio control if another TV set plays the same sound as the respective TV set.

In another embodiment, the position determination unit may comprise a camera in at least one of the TV sets, the camera being configured to locate users in front of the respective TV set.

With the camera, the TV sets are capable of identifying a user and determining the exact position of the user. The camera may e.g. be a camera with an integrated signal analysis function. The signal analysis function may e.g. comprise image recognition and analysis functions to identify users and determine their positions.

If the TV sets identify a user and the position of the user, they may further enhance the audio playback not only based on their relative position but also based on the position of the user. The TV that is right in front of the user may e.g. be determined to be the center TV that plays a center channel or both stereo channels. The TVs left and right of the user may then play the respective left and right channels. The sound may then "move" with the user as he walks along the row of TV sets. It is understood, that the cameras may be coupled with the control unit in the form of local controllers. The described functions may be distributed between the camera and a logic unit in the camera and the local controllers. In one embodiment, the camera may be a camera that is provided in the TV set for video conferencing applications and the functions that identify the user may be fully implemented on the local controller in the TV set.

In a further embodiment, the position determination unit may comprise an external camera that is arranged externally to the TV sets.

An external camera that is arranged externally to the TV sets, e.g. in the show room, may easily identify the positions of the TV sets. Such an external camera may e.g. be an external camera with a fish eye lens that is arranged at the ceiling of the show room. It is understood, that the external camera may comprise respective signal analysis functions. As alternative, the external camera may e.g. provide the external camera image to a central processing unit that evaluates the external camera images. In addition, such a central processing unit may evaluate the images of multiple external cameras.

It is understood, that a communication channel may be established from the external camera to the TV sets or from the central processing unit to the TV sets to transmit control information.

In addition, the external camera may also perform the function of detecting a user or potential customer and determining the position of the user or potential customer with relation to the TV sets. Such a camera may also determine the direction of the customers gaze and select the respective TV set to be the TV set that provides the center channel. The other TV sets may then provide the respective channels according to their position with regard to the center channel TV set.

It is understood, that more than one camera, e.g. two or more, may be used. A fish-eye camera may e.g. be provided on the ceiling and one camera may be provided in the wall that accommodates the TV sets. While the fish-eye camera may serve to identify the single TV sets and a position of a potential customer, the single camera in the wall may e.g. determine the direction of the potential customers gaze.

In an embodiment, the position determination unit may comprise a manual position input interface configured to receive the position of at least one of the TV sets from a user.

The manual position input interface may e.g. be a central manual position input interface in a control computer for the show room. It is however also possible to provide the manual position input interface as individual input interfaces in the single TV sets. The individual input interfaces may allow a user to input the position of the respective TV set with regard to other TV sets via the remote control of the TV set. It is further possible for the user to directly select the type of audio output for the respective TV set. A user may e.g. select that a specific TV set plays only the center channel, the left channel or the right channel or any of the surround channels.

In another embodiment, the audio playback system may comprise a communication network configured to communicatively couple the TV sets.

The TV sets, e.g. the local controllers in the TV sets, may communicate via the communication network with each other. This allows the TV sets to synchronize to each other. For example one TV set may initiate the show room surround mode and all other TV sets may switch to a common video source. In addition, if for example only one of the TV sets comprises a camera or an external camera is provided, the information gained from the camera images, e.g. position data for the single TV sets, may be forwarded via the communication network to the respective TV sets. It is also possible, that the TV sets use the communication network to synchronize the position determination. The TV sets may e.g. determine a sequence for playing a test sound that allows the other TV sets to determine the relative position of the TV set via their microphones as explained above. With the sequence it may be determined which TV set plays a sound at what point in time. It is therefore avoided that multiple TV sets play a test or location sound at the same time.

Synchronizing the TV sets may also refer to determining a color or pattern that each display shows during a setup phase to determine the positions of the TV sets with a camera. If every TV set displays a different color or pattern, the single TV sets may easily be identified on a camera picture.

Further a master TV set may be defined, e.g. the TV set at which a user is actively looking at (detected e.g. by an internal or an external camera). The master TV set may then provide an audio and/or video stream to the other TV sets. The master TV set may e.g. stream the audio/video signal that is the source signal for the master TV set to other TV sets together with an indication of which audio signal or channel each of the other TV sets should play. The source signal may e.g. be transmitted as a multicast signal to all TV sets. The master TV set may alternatively transmit only the audio channels to the TV sets that the respective TV sets are to play or the video with the respective audio channels.

It is understood, that a central processing device or the local controllers may perform the above mentioned functions.

In an embodiment, the audio playback system may comprise an activation user input configured to receive an activation signal from a user, wherein the control unit is configured to activate or deactivate the audio playback system based on the activation signal.

The activation user input may e.g. be implemented on every TV set as a button on the remote control or as a menu entry in an on screen menu of the respective TV set. However, if present, the communication network may also be used and the activation user input may be provided in a central control pc. As alternative, a single TV may forward the activation signal to other TV sets via the communication network.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an audio playback system according to the present invention;
Fig. 2 shows a block diagram of another embodiment of an audio playback system according to the present invention;
Fig. 3 shows a block diagram of another embodiment of an audio playback system according to the present invention; and
Fig. 4 shows a block diagram of an embodiment of an audio playback method according to the present invention.

In the figures like reference signs denote like elements unless stated otherwise.

### DETAILED DESCRIPTION OF THE DRAWINGS

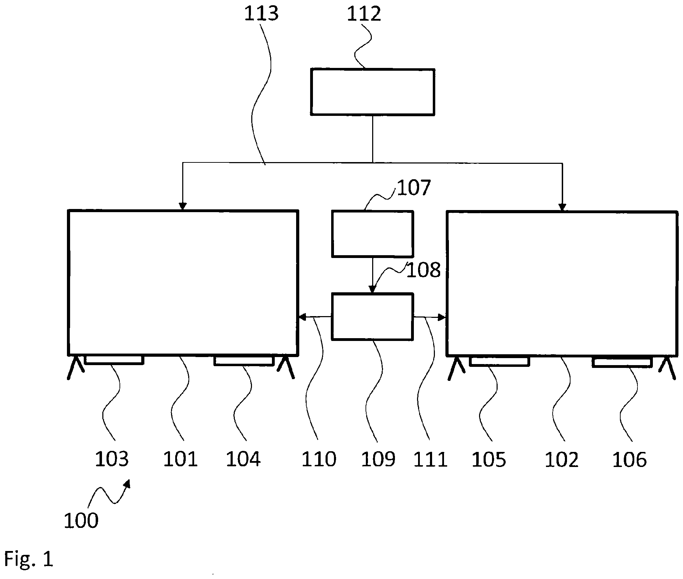

Fig. 1 shows a block diagram of an embodiment of an audio playback system 100. The audio playback system 100 may e.g. be used in a store show room to display different TV sets 101, 102 to potential customers. The TV sets 101, 102 each comprise a left speaker 103, 105 and right speaker 105, 106. It is understood, that this arrangement is just exemplary and that more TV sets may be provided and that the TV sets may comprise more speakers, e.g. for playing surround sound with 5.1 or more channels. Such TV sets may also be called comprising a "virtual surround sound" arrangement.

In show rooms a common signal source 112 may be provided that supplies the same audio signal 113 to the TV sets 101, 102. It is understood, that the audio signal 113 may be embedded e.g. in a video signal that is provided from the signal source 112 to the TV sets 101, 102. It is further understood, that the TV sets 101, 102 may also be coupled to a cable or satellite outlet instead of or in addition to the signal source 112 and receive audio/video signals via the cable or satellite outlet.

The audio playback system 100 comprises a position determination unit 107 that is coupled to a control unit 109. The control unit 109 is also coupled to the TV sets 101, 102.

The position determination unit 107 determines relative positions 108 of the TV sets 101, 102 to each other and provides respective information about the relative positions 108 to the control unit 109. The control unit 109 analyses the relative positions 108 and provides respective control signals 110, 111 to the TV sets 101, 102 to adapt the audio playback of audio signal 113 according to the determined relative positions 108.

The position determination unit 107 may e.g. determine the relative position of the TV sets 101, 102 regarding the side on which the respective TV sets 101, 102 are positioned. In the example with two TV sets, the position determination unit 107 may e.g. determine which one of the TV sets 101, 102 is on the left side and which one is on the right side. It is understood, that the position determination unit 107 may also perform such analysis for more than two TV sets 101, 102. In such an arrangement the position determination unit 107 may e.g. determine, which groups of TV sets are on the left, which are on the right and which are in the center. With three TV sets, the position determination unit 107 may e.g. determine a left, a center and a right TV set.

The control unit 109 will then use the relative positions 108 to control the audio playback in the TV sets 101, 102 accordingly. In the arrangement of Fig. 1 the control unit 109 may e.g. control TV set 101 to play on both speakers 103, 104 the left channel audio signal. The control unit 109 may further control the TV set 102 to play on both speakers 105, 106 the right channel audio signal.

With more TV sets, e.g. with three TV sets, the control unit 109 may control the center TV set to play the left channel audio on the left speaker and the right channel audio on the right speaker. It is understood, that if TV sets are position in rear positions, i.e. behind a user when he views TV sets 101, 102, these further TV sets may be used to play rear or surround channels of the audio signal.

It is understood, that the control unit 109 may be provided as hardware, software or a combination of both. The function of the control unit 109 may e.g. be provided as an ASIC, or a microcontroller with an according firmware or e.g. a central control computer of the show room.

The position determination unit 107 is shown as a dedicated unit. It is however understood, that the position determination unit 107 may also be integrated in the single TV sets 101, 102. The same applies to the control unit 109. Although shown as dedicated control unit 109, the control unit 109 may also be integrated into one or more of the TV sets 101, 102.

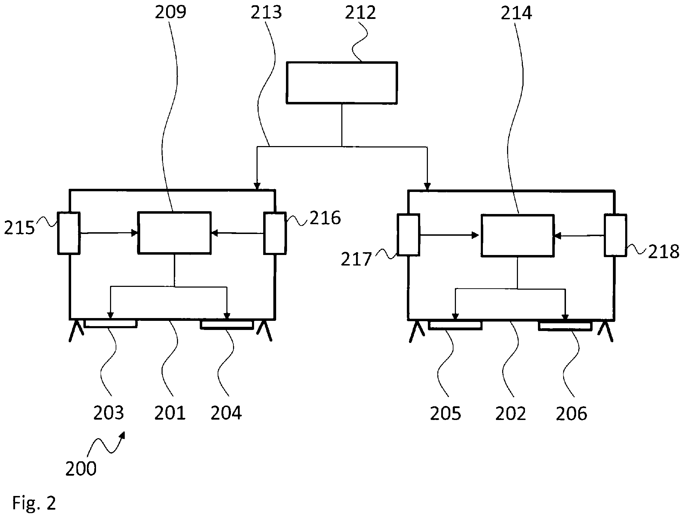

Fig. 2 shows a block diagram of another embodiment of an audio playback system 200. The audio playback system 200 is also shown with two TV sets 201, 202. The audio playback system 200 is based on the audio playback system 100. Therefore, the audio playback system 200 also comprises a position determination unit and a control unit.

However, in the audio playback system 200 the position determination unit and the control unit are provided as local position determination units and local control units in each of the TV sets 201, 202. The position determination unit is provided in each case in the form of two microphones 215, 216, 217, 218 on the side edges of the TC sets 201, 202. The microphones 215, 216, 217, 218 may e.g. be microphones 215, 216, 217, 218 that are provided in the TV sets 201, 202 for recording audio signals during video conferencing that may be performed with the TV sets 201, 202. As an alternative, the microphones 215, 216, 217, 218 may be specifically provided for the audio playback system 200. Every TV set 201. 202 comprises a local controller 209, 214. The local controllers 209, 214 perform the function of determining the relative positions of the TV sets 201, 202 based on the signals provided by the microphones 215,216,217,218.

The local controllers 209, 214 may e.g. determine signal level of an audio signal received by the two microphones 215, 216, 217, 218 or the signal propagation times for the audio signals. This allows the local controllers 209, 214 to determine if a TV set 201, 202, i.e. the source of the received audio, is to the right or to the left of the respective TV set 201, 202.

In each case, the local controllers 209, 214 will then determine, which part of the audio signal 213 the respective TV set 201, 202 will play through its speakers 203, 204,205,206.

If for example the local controller 209 determines that the source of the audio signal received by the microphones 215, 216 is on the right, the local controller 209 may play only left channel audio via speakers 203, 204. The local controller 210 may determine that the source of the audio signal received by microphones 217, 218 is on the left, the local controller 210 may determine to play only right channel audio via speakers 205, 206. As explained above, if more TV sets are present, the respective local controller may also determine to play left and right channel audio via the respective speakers.

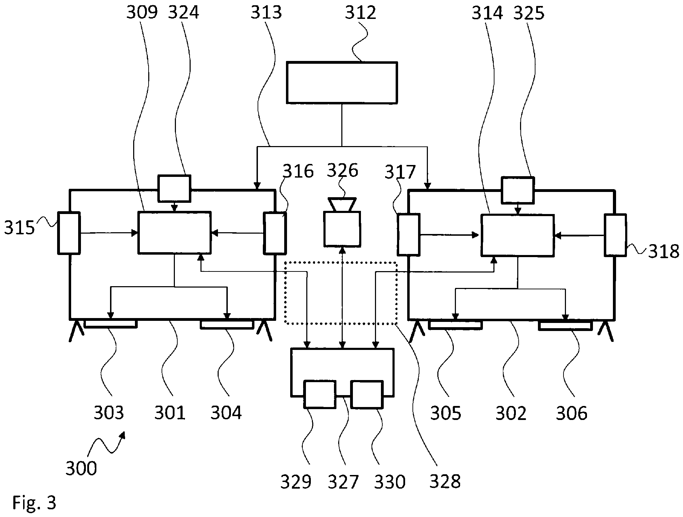

Fig. 3 shows a block diagram of another embodiment of an audio playback system 300. The audio playback system 300 is also shown with two TV sets 301, 302. It is however understood, that more TV sets are possible. The audio playback system 300 is based on the audio playback system 200. Therefore, the TV sets 301, 302 comprise microphones 315, 316, 317, 318 and local controllers 309, 310. In addition, every TV set 301, 302 comprises a local camera 324, 325 that may provide a camera image to the respective local controllers 309, 310.

The audio playback system 300 further comprises an external camera 326 that is coupled via a communication network 328 to a central control unit 327. The central control unit 327 further comprises an activation user input 329 and a manual position user interface 330. It is understood, that the audio playback system 300 comprises a plurality of elements, but that some of the shown elements may be optional. For example the local cameras 324, 325 may be optional in the TV sets 301, 302. In addition, the external camera 326 may be optional. Further, the central control unit 327 may also be optional. The activation user input 329 and the manual position user interface 330 may without the central control unit 327 e.g. be implemented in one of the TV sets 301, 302 via an on-screen display.

In the audio playback system 300 the central control unit 327 may determine the positions of the TV sets 301, 302 based on camera images taken by the local cameras 324, 325 and/or the external camera 326. The central control unit 327 may e.g. comprise respective image and/or object recognition functions. The central control unit 327 may e.g. during a setup phase control the TV sets 301, 302 to display respective patterns and/or colors that allow identifying the single TV sets 301, 302 in an image taken by the external camera 326. Without the external camera, the TV sets 301, 302 may e.g. synchronize to play audio alternatingly such that the other TV sets 301, 302 may identify the location or origin of the sounds with their microphones 315, 316, 317, 318.

The external camera 326 and the local cameras 324, 325 may further be used to identify the position of a user in front of the TV sets 301, 302 and adapt the audio playback accordingly.

It is understood, that the features described above for the audio playback system 100, the audio playback system 200 and the audio playback system 300 may be freely combined. For example, the external camera 326 and/or the central control unit 327 may be combined with the audio playback system 100 or the audio playback system 200. The same applies to the local cameras 324, 325.

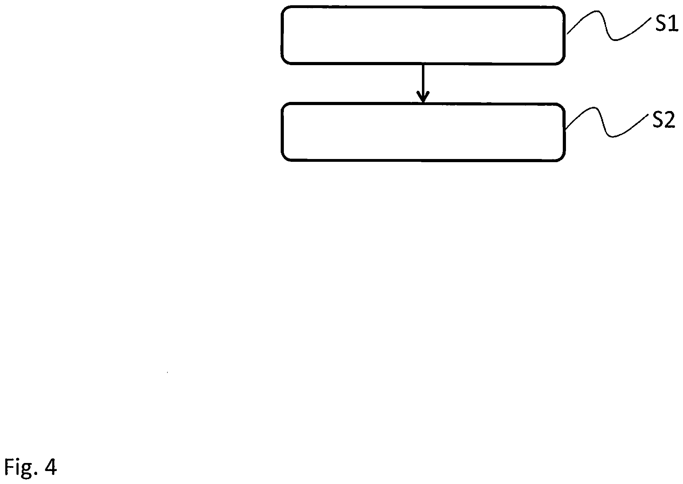

For sake of clarity in the following description of the method based Fig. 4 the reference signs used above in the description of apparatus based Figs. 1 - 3 will be maintained.

Fig. 4 shows a block diagram of an audio playback method for a plurality of TV sets 101, 102, 201, 202, 301, 302.

The audio playback method comprises determining S1 relative positions 108 of the TV sets 101, 102, 201, 202, 301, 302 to each other. Further, the audio playback method comprises adapting S2 audio playback of an audio signal 113, 213, 313 via the TV sets 101, 102, 201, 202, 301, 302 according to the determined relative positions 108 of the TV sets 101, 102, 201, 202, 301, 302.

Determining S1 the relative positions 108 may comprise recording sounds with at least two microphones 215, 216, 217, 218, 315, 316, 317, 318 in every one of the TV sets 101, 102, 201, 202, 301, 302, and determining the relative position 108 of a respective one of the TV sets 101, 102, 201, 202, 301, 302 with regard to other TV sets 101, 102, 201, 202, 301, 302 based on the signals received by the microphones 215, 216, 217, 218, 315, 316, 317, 318. Determining S1 the relative positions 108 may also comprise determining the relative positions 108 with an external camera 326 that is arranged externally to the TV sets 101, 102, 201, 202, 301, 302. Determining S1 the relative positions 108 may in addition comprise receiving a manual position input for at least one of the TV sets 101, 102, 201, 202, 301, 302 from a user.

The audio playback method may comprise locating users in front of the TV sets 101, 102, 201, 202, 301, 302 with at least one camera 324, 325 in a respective one of the TV sets 101, 102, 201, 202, 301, 302 and adapting audio playback of an audio signal 113, 213, 313 via the TV sets 101, 102, 201, 202, 301, 302 according to the locations of the users.

Further, the TV sets 101, 102, 201, 202, 301, 302 may be communicatively coupled to each other, e.g. via a network 328.

The audio playback method may comprise receiving an activation signal from a user, wherein the audio playback method is activated or deactivated based on the activation signal.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides an audio playback system 100, 200, 300 for a plurality of TV sets 101, 102, 201, 202, 301, 302, the audio playback system 100, 200, 300 comprising a position determination unit 107 configured to determine relative positions 108 of the TV sets 101, 102, 201, 202, 301, 302 to each other, and a control unit 109, 209, 214, 309, 314 for controlling the TV sets 101, 102, 201, 202, 301, 302 to adapt audio playback of an audio signal 113, 213, 313 according to the determined relative positions 108 of the TV sets 101, 102, 201, 202, 301, 302.

### List of reference signs

- 100, 200, 300: audio playback system
- 101, 102, 201, 202, 301, 302: TV set
- 103, 104, 105, 106, 203, 204, 205, 206: speaker
- 303, 304 ,305, 306: speaker
- 107: position determination unit
- 108: relative position
- 109, 209, 214, 309, 314: control unit
- 110, 111: control signal
- 112, 212, 312: signal source
- 113, 213, 313: audio signal
- 215, 216, 217, 218, 315, 316, 317, 318: microphone
- 324, 325: camera
- 326: external camera
- 327: central control unit
- 328: communication network
- 329: activation user input
- 330: manual position input interface
- S1, S2: method steps

## Claims

1. Audio playback system (100, 200, 300) for a plurality of TV sets (101, 102, 201, 202, 301, 302), the audio playback system (100, 200, 300) comprising:
a position determination unit (107) configured to determine relative positions (108) of the TV sets (101, 102, 201, 202, 301, 302) to each other, and
a control unit (109, 209, 214, 309, 314) for controlling the TV sets (101, 102, 201, 202, 301, 302) to adapt audio playback of an audio signal (113, 213, 313) according to the determined relative positions (108) of the TV sets (101, 102, 201, 202, 301, 302).

2. Audio playback system (100, 200, 300) according to claim 1, wherein the position determination unit (107) comprises at least two microphones (215, 216, 217, 218, 315, 316, 317, 318) in every one of the TV sets (101, 102, 201, 202, 301, 302), and
wherein the control unit (109, 209, 214, 309, 314) comprises a local controller in every one of the TV sets (101, 102, 201, 202, 301, 302) that is coupled to the respective microphones (215, 216, 217, 218, 315, 316, 317, 318) and is configured to determine the relative position (108) of the respective TV set (101, 102, 201, 202, 301, 302) with regard to other TV sets (101, 102, 201, 202, 301, 302) based on the signals received by the microphones (215, 216, 217, 218, 315, 316, 317, 318).

3. Audio playback system (100, 200, 300) according to any one of the preceding claims, wherein the position determination unit (107) comprises a camera (324, 325) in at least one of the TV sets (101, 102, 201, 202, 301, 302), the camera (324, 325) being configured to locate users in front of the respective TV set (101, 102, 201, 202, 301, 302).

4. Audio playback system (100, 200, 300) according to any one of the preceding claims, wherein the position determination unit (107) comprises an external camera (326) that is arranged externally to the TV sets (101, 102, 201, 202, 301, 302).

5. Audio playback system (100, 200, 300) according to any one of the preceding claims, wherein the position determination unit (107) comprises a manual position input interface (330) configured to receive the position of at least one of the TV sets (101, 102, 201, 202, 301, 302) from a user.

6. Audio playback system (100, 200, 300) according to any one of the preceding claims, comprising a communication network (328) configured to communicatively couple the TV sets (101, 102, 201, 202, 301, 302).

7. Audio playback system (100, 200, 300) according to any one of the preceding claims, comprising an activation user input (329) configured to receive an activation signal from a user, wherein the control unit (109, 209, 214, 309, 314) is configured to activate or deactivate the audio playback system (100, 200, 300) based on the activation signal.

8. TV set (101, 102, 201, 202, 301, 302) for an audio playback system (100, 200, 300) according to any one of the preceding claims, the TV set (101, 102, 201, 202, 301, 302) comprising:
at least two microphones (215, 216, 217, 218, 315, 316, 317, 318), and
a control unit (109, 209, 214, 309, 314) coupled to the microphones (215, 216, 217, 218, 315, 316, 317, 318) and configured to determine a relative position (108) of the TV set (101, 102, 201, 202, 301, 302) relative to other TV sets (101, 102, 201, 202, 301, 302) based on signals received from the microphones (215, 216, 217, 218, 315, 316, 317, 318) or configured to receive an externally determined indication of the relative position (108) of the TV set (101, 102, 201, 202, 301, 302) relative to the other TV sets (101, 102, 201, 202, 301, 302),
wherein the control unit (109, 209, 214, 309, 314) is configured to adapt audio playback of an audio signal (113, 213, 313) in the TV set (101, 102, 201, 202, 301, 302) according to the relative position (108).

9. Audio playback method for a plurality of TV sets (101, 102, 201, 202, 301, 302), the audio playback method comprising:
determining (S1) relative positions (108) of the TV sets (101, 102, 201, 202, 301, 302) to each other, and
adapting (S2) audio playback of an audio signal (113, 213, 313) via the TV sets (101, 102, 201, 202, 301, 302) according to the determined relative positions (108) of the TV sets (101, 102, 201, 202, 301, 302).

10. Audio playback method according to claim 9, wherein determining the relative positions (108) comprises recording sounds with at least two microphones (215, 216, 217, 218, 315, 316, 317, 318) in every one of the TV sets (101, 102, 201, 202, 301, 302), and determining the relative position (108) of a respective one of the TV sets (101, 102, 201, 202, 301, 302) with regard to other TV sets (101, 102, 201, 202, 301, 302) based on the signals received by the microphones (215, 216, 217, 218, 315, 316, 317, 318).

11. Audio playback method according to any one of the preceding claims 9 and 10, comprising locating users in front of the TV sets (101, 102, 201, 202, 301, 302) with at least one camera (324, 325) in a respective one of the TV sets (101, 102, 201, 202, 301, 302) and adapting audio playback of an audio signal (113, 213, 313) via the TV sets (101, 102, 201, 202, 301, 302) according to the locations of the users.

12. Audio playback method according to any one of the preceding claims 9 to 11, wherein determining the relative positions (108) comprises determining the relative positions (108) with an external camera (326) that is arranged externally to the TV sets (101, 102, 201, 202, 301, 302).

13. Audio playback method according to any one of the preceding claims 9 to 12, wherein determining the relative positions (108) comprises receiving a manual position input for at least one of the TV sets (101, 102, 201, 202, 301, 302) from a user.

14. Audio playback method according to any one of the preceding claims 9 to 13, comprising communicatively coupling the TV sets (101, 102, 201, 202, 301, 302).

15. Audio playback method according to any one of the preceding claims 9 to 14, comprising receiving an activation signal from a user, wherein the audio playback method is activated or deactivated based on the activation signal.
